# EUROPÄISCHE PATENTSCHRIFT

(11) **EP 2 165 351 B1**
(45) Veröffentlichungstag und Bekanntmachung des Hinweises auf die Patenterteilung: **01.02.2012**
(21) Anmeldenummer: 08774940.4
(22) Anmeldetag: 09.07.2008
(51) Int. Cl.: H01J 61/44, H01J 61/48, C09K 11/81, C09K 11/78, C09K 11/59

(54) **LEUCHTSTOFFMISCHUNG FÜR EINE ENTLADUNGSLAMPE UND ENTLADUNGSLAMPE, INSBESONDERE HG-NIEDERDRUCKENTLADUNGSLAMPE**
ILLUMINANT MIXTURE FOR A DISCHARGE LAMP AND DISCHARGE LAMP, IN PARTICULAR AN Hg LOW PRESSURE DISCHARGE LAMP
MÉLANGE LUMINESCENT POUR LAMPE À DÉCHARGE ET LAMPE À DÉCHARGE APPROPRIÉE, NOTAMMENT LAMPE À DÉCHARGE À VAPEUR DE MERCURE (HG) BASSE PRESSION

(30) Priorität: 16.07.2007 DE 102007033026
(43) Veröffentlichungstag der Anmeldung: 24.03.2010
(73) Patentinhaber: OSRAM AG, 81543 München (DE)
(72) Erfinder: JERMANN, Frank, 86343 Königsbrunn (DE); KONRAD, Armin, 86845 Grossaitingen (DE); ZACHAU, Martin, 82269 Geltendorf (DE)
(86) Internationale Anmeldenummer: PCT/EP2008/058935
(87) Internationale Veröffentlichungsnummer: WO 2009/010438

(56) Entgegenhaltungen:
- EP-A- 1 428 863
- WO-A-2007/054875
- WO-A1-2005/045881
- US-A- 5 422 538
- US-A1- 2004 095 058

## Beschreibung

### Technisches Gebiet

Die Erfindung betrifft eine Leuchtstoffmischung für eine Entladungslampe, wobei die Leuchtstoffmischung eine erste und zumindest eine zweite Leuchtstoffzusammensetzung aufweist. Des Weiteren betrifft die Erfindung eine Entladungslampe mit einem Entladungsgefäß, an dem eine Leuchtstoffschicht ausgebildet ist.

### Stand der Technik

Für die Beschichtung von Hg-Niederdruckentladungslampen werden in der Regel ein blauer, ein roter und ein grüner Leuchtstoff zur Strahlungskonversion verwendet, um im Bereich der Juddschen Geraden Farbtemperaturen größer 2500 K beispielsweise innerhalb der standardisierten IEC-Farbtoleranzbereiche realisieren zu können. Die heute üblicherweise eingesetzten Leuchtstoffmischungen, wie beispielsweise BAM, CAT, YOE, konvertieren dabei zum Großteil die durch die Hg-Niederdruckentladung erzeugte Strahlung mit den Wellenlängen 185 nm und 254 nm in sichtbares Licht.

Die höchste Effizienz wird heutzutage mit seltenerdhaltigen Leuchtstoffen erzielt. Dabei wird das im grünen Spektralbereich liegende Emissionsspektrum des Leuchtstoffs im Wesentlichen durch die Emission von Tb (Terbium) und die im roten Spektralbereich liegende Emission der Leuchtstoffmischung durch die Dotierung mit Eu (Europium) ermöglicht. Für den gegebenenfalls vorhandenen, im blauen Spektralbereich emittierenden Leuchtstoffanteil bzw. die Leuchtstoffzusammensetzung der Leuchtstoffmischung erfolgt die Emission ebenfalls durch eine Dotierung mit Eu. Für die gegenwärtig üblicherweise eingesetzten Leuchtstoffzusammensetzungen zur Emission im grünen Spektralbereich (CAT, LAP und CBT) wird neben der Tb-Dotierung ein verhältnismäßig geringer Anteil von Ce (Cer) zur Verbesserung der UV-Vis-Strahlungskonversion eingesetzt. Tb ist ein relativ teures Material, wodurch sich die Kosten für eine Leuchtstoffmischung und somit auch die Kosten einer Entladungslampe erhöhen.

Die WO 2007/054875 A1 offenbart eine Entladungslampe, welche ein Entladungsgefäß mit einer Leuchtstoffschicht aufweist. Die Leuchtstoffschicht umfasst ein Gemisch aus rot und grün lumineszierenden Materialien. Das rot lumineszierende Material umfasst (Y,Gd)₂O₃:Eu, das grün lumineszierende Material umfasst (Ba,Ca,Sr)₂SiO₄:Eu und/oder (Sr, Ca, Ba, Mg, Zn) Si₂N₂O₂:Eu. Partikel des grün lumineszierenden Materials sind mit Al₂O₃ ummantelt.

Die US 2004/095058 A1 offenbart eine Anzeigeeinrichtung, die als Plasma-Display oder als Leuchtstofflampe ausgebildet sein kann. Die Anzeigeeinrichtung besteht aus einem hohlen, durchscheinendes Glas, welches mit einem Medium zur Erzeugung mehrerer Wellenlängen von UV-Strahlung gefüllt ist. Eine Vielzahl von Leuchtstoffen auf der Innenseite des Glaskörpers dient zum Emittieren sichtbarer Strahlung bei Einwirkung der UV-Strahlung. Als Leuchtverbindung mit einem Emissionsspektrum im roten Spektralbereich ist unter anderem Y₂O₃: Eu (YOE) offenbart.

Die EP 1428863 A1 offenbart eine Leuchtstofflampe mit einem Leuchtstoffgemisch aus mindestens vier Leuchtstoffen. Die Mischung umfasst einen blauen Leuchtstoff mit einem Emissionsmaximum bei 440-490 nm, einen blau-grünen Leuchtstoff mit einem Emissionsmaximum bei 475-525 nm, einer grünen Leuchtstoff mit einem Emissionsmaximum bei 515-550 nm, einen orangen Leuchtstoff mit einem Emissionsmaximum von 550-600 nm, einen roten Leuchtstoff mit einem Emissionsmaximum bei 615-665 nm, und einen roten Leuchtstoff, der ein Emissionsmaximum bei 600-670 nm aufweist.

Die US 5422538 offenbart eine Quecksilber-Niederdruck-Entladungslampe mit einer lumineszierenden Schicht, die ein erstes Lumineszenzmaterial mit einer Emission vor allem im blauen Spektralbereich, einen zweiten Leuchtstoff mit einer Emission im roten Spektralbereich und einen dritten Leuchtstoff mit einem Emissionsmaximum hauptsächlich im gelben Bereich des sichtbaren Spektrums aufweist. Der dritte Leuchtstoff ist durch die Formel Sr_{(2-x-y)}MₓSiO₄:Eu⁺²_{y} mit M = Ba, Ca definiert.

Die WO 2005/045881 A1 offenbart eine Entladungslampe mit einer eine Indiumverbindung umfassenden und im Wesentlichen frei von Quecksilber ausgebildeten Gasfüllung. Das Entladungsgefäß ist mit einer Leuchtschicht vorgesehen. Die lumineszierenden Leuchtschicht weist einen Leuchtstoff aus einem Nitridosilikat oder aus einem Oxonitridosilikat auf.

### Darstellung der Erfindung

Es ist Aufgabe der vorliegenden Erfindung, eine Leuchtstoffmischung für eine Entladungslampe sowie eine Entladungslampe zu schaffen, mit welcher die Energieeffizienzklasse A sowie eine hohe Farbwiedergabe erreicht werden kann, wobei zusätzlich die Kosten der Leuchtstoffmischung als auch der Entladungslampe reduziert werden sollen.

Diese Aufgabe wird durch eine Leuchtstoffmischung, welche die Merkmale nach Anspruch 1 aufweist, und eine Entladungslampe, welche die Merkmale nach Anspruch 9 aufweist, gelöst.

Eine erfindungsgemäße Leuchtstoffmischung für eine Entladungslampe weist eine erste und zumindest eine zweite Leuchtstoffzusammensetzung auf. Die erste Leuchtstoffzusammensetzung weist ein Emissionsspektrum im grünen und/oder gelben Spektralbereich auf, und die erste Leuchtstoffzusammensetzung umfasst des Weiteren eine erste Leuchtstoffverbindung, welche Tb-frei ausgebildet ist und darüber hinaus zur Absorption der von einer Hg-Quelle emittierten UV (Ultraviolett) -Strahlung ausgebildet ist.

Die erste Leuchtstoffverbindung der ersten Leuchtstoffzusammensetzung weist ein Orthosilikat der allgemeinen Formel (Ba, Sr, Ca)₂SiO₄:Eu auf.

Es kann auch vorgesehen sein, dass die erste Leuchtstoffverbindung der ersten Leuchtstoffzusammensetzung als Bestandteil (Sr_{1-x-y}BaₓCa_{y})Si₂O₂N₂:Eu, welches im folgenden kurz als SrSiON bezeichnet ist, aufweist.

Gerade diese beiden ersten Leuchtstoffverbindungen, welche Bestandteile in Form des Orthosilikats oder von SrSiON aufweisen, ermöglichen in besonders hohem Maße die Absorption der UV-Strahlung einer Hg-Quelle und weisen ein Emissionsspektrum im grünen bis gelben Spektralbereich auf. Ferner sind diese spezifischen ersten Leuchtstoffverbindungen auch besonders für die Konversion dieser Strahlung in das Emissionsspektrum der Leuchtstoffmischung geeignet.

Zumindest die erste Leuchtstoffverbindung der ersten Leuchtstoffzusammensetzung ist mit Eu (Europium) dotiert.

Für die zweite Leuchtstoffverbindung der ersten Leuchtstoffzusammensetzung ist der Leuchtstoff (Ce,Tb)MgAl₁₁O₁₉ (CAT) und/oder (La,Ce,Tb)PO₄ (LAP) als Bestandteil vorgesehen.

Die zweite Leuchtstoffzusammensetzung der Leuchtstoffmischung ist mit einem Emissionsspektrum im roten Spektralbereich ausgebildet. Die zweite Leuchtstoffzusammensetzung weist als Bestandteil Y₂O₃:Eu (YOE) auf.

Durch eine derartige Leuchtstoffmischung kann die Energieeffizienzklasse A einer Lampe erreicht werden und darüber hinaus eine hohe Farbwiedergabe von 80 ermöglicht werden. Darüber hinaus kann eine Leuchtstoffmischung mit reduzierten Kosten hergestellt werden. Mit der erfindungsgemäßen Leuchtstoffmischung kann eine gleiche oder insbesondere höhere Effizienz zu einer Leuchtstoffmischung aus dem Stand der Technik gewährleistet werden, wobei insbesondere die erste Leuchtstoffverbindung der ersten Leuchtstoffzusammensetzung Tb-frei konzipiert ist, und somit die Leuchtstoffmischung mit einer deutlich reduzierten Tb-Menge in der zweiten Leuchtstoffzusammensetzung oder einer anderen weiteren Leuchtstoffzusammensetzung der Leuchtstoffmischung bereitgestellt werden kann.

Die Leuchtstoffmischung ist so ausgebildet, dass die erste Leuchtstoffverbindung der ersten Leuchtstoffzusammensetzung zur Konversion der absorbierten UV-Strahlung in ihr Emissionsspektrum ausgebildet ist.

Bevorzugt ist vorgesehen, dass abhängig von einem einstellbaren Massenverhältnis zwischen der ersten und der zweiten Leuchtstoffzusammensetzung die Farbtemperatur der emittierten Strahlung der Leuchtstoffmischung einstellbar ist.

Der Massenanteil der ersten Leuchtstoffzusammensetzung beträgt vorzugsweise kleiner oder gleich 50 %. Insbesondere lassen sich mit der Leuchtstoffmischung vorzugsweise Farbtemperaturen größer 2500 K einstellen. Mit der Leuchtstoffmischung lassen sich somit Leuchtstofflampen mit einer Farbtemperatur größer 2500 K auch im Bereich der Juddschen Geraden realisieren. Eine allgemeine Farbwiedergabe im Bereich von 80 wird erreicht.

Vorzugsweise weist die erste Leuchtstoffverbindung der ersten Leuchtstoffzusammensetzung für Strahlung mit einer Wellenlänge kleiner 440 nm eine starke Absorption auf. Dabei bedeutet eine starke Absorption, dass die Reflexion einer gepressten Pulvertablette in 45°/0°-Geometrie gemessen relativ zu einem Al₂O₃-Standard weniger als 60 % beträgt.

Vorzugsweise weist die erste Leuchtstoffverbindung der ersten Leuchtstoffzusammensetzung für Strahlung mit einer Wellenlänge von etwa 254 nm eine sehr starke Absorption auf. Dabei bedeutet eine sehr starke Absorption, dass die Reflexion einer gepressten Pulvertablette in 45°/0°-Geometrie gemessen relativ zu einem Al₂O₃-Standard weniger als 40 % beträgt.

Vorzugsweise ist die Leuchtstoffmischung so konzipiert, dass die erste Leuchtstoffverbindung der ersten Leuchtstoffzusammensetzung für Strahlung mit einer Wellenlänge größer 530 nm eine schwache Absorption aufweist. Dabei bedeutet eine schwache Absorption, dass die Reflexion einer gepressten Pulvertablette in 45°/0°-Geometrie gemessen relativ zu einem Al₂O₃-Standard mehr als 90 % beträgt.

Vorzugsweise ist das Emissionsspektrum der ersten Leuchtstoffverbindung der ersten Leuchtstoffzusammensetzung der erfindungsgemäßen Leuchtstoffmischung mit einer dominierenden Wellenlänge zwischen 530 nm und 570 nm ausgebildet.

Insbesondere ist die Leuchtstoffmischung so ausgebildet, dass die Halbwertsbreite der Emissionsbande der ersten Leuchtstoffverbindung der ersten Leuchtstoffzusammensetzung kleiner 100 nm ist.

Vorzugsweise ist der Gewichtsanteil bzw. der Massenanteil der Dotierung mit Eu zwischen 0,1 % und 15 %. Insbesondere liegt dieses Intervall zwischen 0,2 % und 2 %. Besonders bevorzugt erweist es sich, wenn dieser Massenanteil der Dotierung mit Eu zwischen 1 % und 2 % beträgt, insbesondere dann, wenn die erste Leuchtstoffverbindung als Bestandteil SrSiON umfasst.

Es ist vorgesehen, dass die zweite Leuchtstoffverbindung der ersten Leuchtstoffzusammensetzung als Bestandteil Tb umfasst. Somit kann insbesondere vorgesehen sein, dass die Leuchtstoffmischung eine erste Leuchtstoffzusammensetzung aufweist, welche ein Emissionsspektrum im grünen bis gelben Spektralbereich aufweist, wobei diese erste Leuchtstoffzusammensetzung zumindest zwei unterschiedliche Leuchtstoffverbindungen umfasst. Die erste Leuchtstoffverbindung dieser ersten Leuchtstoffzusammensetzung ist stets Tb-frei, wobei die zweite Leuchtstoffverbindung dieser ersten Leuchtstoffzusammensetzung Tb-haltig ist. Vorzugsweise ist vorgesehen, dass in der ersten Leuchtstoffzusammensetzung der Massenanteil an Tb-haltigen zweiten Leuchtstoffverbindungen kleiner ist als der Massenanteil der Tb-freien ersten Leuchtstoffverbindungen. Insbesondere ist dieser Massenanteil der Tb-haltigen zweiten Leuchtstoffverbindungen kleiner als der Massenanteil an Eu-haltigen ersten Leuchtstoffverbindungen der ersten Leuchtstoffzusammensetzung.

Ganz allgemein ist es bevorzugt vorgesehen, dass der Massenanteil an Tb-haltigen Leuchtstoffverbindungen der gesamten Leuchtstoffmischung kleiner ist als der Massenanteil an Eu-haltigen Leuchtstoffverbindungen der Leuchtstoffmischung.

In bevorzugter Weise umfasst die Leuchtstoffmischung auch eine dritte Leuchtstoffzusammensetzung, welche ein Emissionsspektrum im blauen Spektralbereich aufweist. Es kann vorgesehen sein, dass die dritte Leuchtstoffzusammensetzung eine Leuchtstoffverbindung aufweist, welche BAM oder SCAP als Bestandteil umfasst. Insbesondere kann vorgesehen sein, dass eine Leuchtstoffverbindung der dritten Leuchtstoffzusammensetzung beispielsweise BAM:Eu oder SCAP:Eu ist.

Des Weiteren kann vorzugsweise vorgesehen sein, dass die Leuchtstoffmischung eine vierte Leuchtstoffzusammensetzung umfasst, welche ein Emissionsspektrum im blau-grünen Spektralbereich aufweist. Insbesondere ist es vorteilhaft, wenn die vierte Leuchtstoffzusammensetzung eine Leuchtstoffverbindung umfasst, welche als Bestandteil BAMMn aufweist. Beispielsweise kann als Leuchtstoffverbindung der vierten Leuchtstoffzusammensetzung BAM:Mn,Eu vorgesehen sein. Ebenso kann für die vierte Leuchtstoffzusammensetzung als Bestandteil auch SCAP:Mn vorgesehen sein. Auch dieser spezifische Bestandteil einer Leuchtstoffverbindung für die vierte Leuchtstoffzusammensetzung kann mit Eu dotiert sein.

Durch die Kombination der im grünen bis gelben Spektralbereich emittierenden ersten Leuchtstoffzusammensetzung mit einer im roten und blauen Spektralbereich emittierenden zweiten bzw. dritten Leuchtstoffzusammensetzung kann eine gewünschte Farbtemperatur besonders effizient eingestellt werden. Anstelle einer Mischung aus drei Leuchtstoffzusammensetzungen kann auch eine vierte Leuchtstoffzusammensetzung, welche dann vorzugsweise im blau-grünen Spektralbereich emittiert, hinzugefügt werden. Dadurch kann die Farbwiedergabe erhöht werden.

Es kann vorgesehen sein, dass die erfindungsgemäße Leuchtstoffmischung und/oder zumindest eine der vorteilhaften Ausführungen ausschließlich aus den jeweils genannten Zusammensetzungen besteht und somit keine weiteren chemischen Bestandteile umfasst. Es kann jedoch auch vorgesehen sein, dass dies keine abschließende Komponentenangabe ist, sondern dass die erfindungsgemäße Leuchtstoffmischung und/oder eine vorteilhafte Ausführung davon darüber hinaus auch weitere chemische Bestandteile, insbesondere weitere Leuchtstoffe, umfassen kann.

Vorzugsweise ist die dominierende Wellenlänge des Lampenemissionsspektrums der gesamten Leuchtstoffmischung grö-βer 540 nm. Insbesondere ist sie für Farbtemperaturen kleiner 2750 K größer als 575 nm, für Farbtemperaturen kleiner 2000 K größer als 585 nm, für Farbtemperaturen kleiner 1750 K größer als 590 nm und für solche kleiner als 1250 K größer als 600 nm.

Es soll explizit erwähnt werden, dass alle für die Leuchtstoffmischung und die Leuchtstoffverbindungen angegebenen chemischen Formeln als Idealformeln bezeichnet sind, dass jedoch auch alle über dies Idealformeln hinausgehenden Verbindungen mit (geringfügigen) Abweichungen in der Stöchiometrie explizit von der Erfindung mit umfasst sind. Dies gilt im Besonderen für Abweichungen bei denen die Kristallstruktur gleich bleibt und die Abweichungen in Emissions- und Absorptionsspektren sich in der Peaklage um weniger als 1%, und in der Peakbreite um weniger als 5% unterscheiden.

Als Idealformeln für einige weitere Leuchtstoffe sei nachfolgende Angabe angefügt:
CAT bezeichnet (Ce,Tb) MgAl₁₁O₁₉; LAP bezeichnet (La, Ce, Tb)PO₄; BAM bezeichnet (Ba,Eu)MgAl₁₁O₁₇; BAMMn bezeichnet (Ba, Eu) (Mg, Mn) Al₁₀O₁₇; CBT bezeichnet (Gd, Ce, Tb) (Mg, Zn, Mn) B₅O₁₀; SCAP bezeichnet (Sr, Ba, Ca, Mg, Eu)₅(PO₄)₃(F, Cl) SCAPMn bezeichnet (Sr,Ba,Ca,Mg,Eu,Mn)₅(PO₄)₃(F,Cl); Zinksilikat bezeichnet (Zn, Mg, Mn)₂SiO₄ ; YOE bezeichnet Y₂O₃:Eu.

Ein weiterer Aspekt der Erfindung betrifft eine Entladungslampe mit einem Entladungsgefäß, an dem eine Leuchtstoffschicht ausgebildet ist. Es ist zumindest eine erste Leuchtstoffschicht vorgesehen, welche eine Leuchtstoffmischung gemäß der Erfindung oder eine vorteilhafte Ausgestaltung davon aufweist.

Dadurch lassen sich Entladungslampen, insbesondere Leuchtstofflampen oder Kompaktleuchtstofflampen realisieren, welche keinen oder einen deutlich reduzierten Anteil an Tb aufweisen und dadurch kostengünstiger ausgebildet werden können. Darüber hinaus lassen sich dadurch Entladungslampen herstellen, welche der Energieeffizienzklasse A genügen und eine erhöhte Farbwiedergabe, insbesondere eine Farbwiedergabe von 80, erreichen.

Vorzugsweise ist die erste Leuchtstoffschicht an der Innenseite des Entladungsgefäßes unmittelbar ausgebildet.

Es kann auch vorgesehen sein, dass zwischen der ersten Leuchtstoffschicht und der Innenseite des Entladungsgefäßes zumindest eine Hg-Diffusions-Schutzschicht ausgebildet ist. Dadurch kann die Diffusion von Hg-Ionen in das Glas des Entladungsgefäßes verhindert werden.

Vorzugsweise ist auf der der Innenseite des Entladungsgefäßes abwandten Oberseite der ersten Leuchtstoffschicht eine Schutzschicht ausgebildet, welche zum Schutz der ersten Leuchtstoffverbindung vor VUV-Strahlung und/oder vor einer Reaktion mit Hg-Ionen schützt. Diese Strahlungsschädigungs-Schutzschicht bzw. Reaktionsverhinderungs-Schutzschicht kann als Bestandteil vorzugsweise Al₂O₃ und/oder Y₂O₃ aufweisen. Als VUV-Strahlung wird dabei eine Strahlung mit einer Wellenlänge kleiner 200 nm bezeichnet.

Vorzugsweise ist auf der der Innenseite des Entladungsgefäßes abgewandten Oberseite der ersten Leuchtstoffschicht eine zweite Leuchtstoffschicht ausgebildet, welche Tb aufweist. Diese zweite Leuchtstoffschicht kann als Leuchtstoffmischung beispielsweise CAT-YOE aufweisen. CAT bezeichnet dabei eine chemische Verbindung die im Wesentlichen durch CeMgAl₁₁O₁₉:Tb, YOE im wesentlichen durch Y₂O₃:Eu beschrieben wird. Neben CAT kann als alternativer Grünleuchtstoff LAP und/oder CBT und/oder Zinksilikat vorgesehen sein.

Bevorzugt ist vorgesehen, dass die ersten Leuchtstoffverbindungen der ersten Leuchtstoffzusammensetzung der ersten Leuchtstoffschicht von einer Schutzschicht umgeben sind. Diese die ersten Leuchtstoffverbindungen umgebende Schutzschicht weist vorzugsweise Metalloxide auf. Diesbezüglich können beispielsweise Metalloxide gemäß Al₂O₃, Y₂O₃ oder SiO₂ vorgesehen sein.

Es kann auch vorgesehen sein, dass die die ersten Leuchtstoffverbindungen umgebende Schutzschicht Borate und/oder Phosphate aufweist. Ebenso können ternäre Materialien wie Aluminiumborate und Aluminiumphosphate für diese Schutzschicht vorgesehen sein. Generell sind Metalloxide oder Materialien mit positiver Oberflächenladung in Wasser vorzuziehen, da sie tendenziell die Hg-Adsorption verringern. Besonders gut geeignet sind daher Al₂O₃ und Y₂O₃. Andererseits lassen sich die die ersten Leuchtstoffverbindungen umgebende Schutzschichten aus SiO₂ oftmals besonders dicht, dünn und preiswert herstellen und führen zu einer Verbesserung der Strahlungsstabilität und der Wasserstabilität, so dass sie trotz niedrigerer Oberflächenladung und tendenziell höherer Hg-Adsorption ebenfalls vielfältige Anwendung finden.

Durch eine derartige die ersten Leuchtstoffverbindungen umgebende Schutzschicht können Kriterien im Hinblick auf Stabilität gegenüber der anregenden Strahlung der Leuchtstoffzusammensetzung, eine geringe Affinität gegenüber Hg und damit eine geringere Adsorption von Hg während des Lampenbetriebs, sowie eine erhöhte Stabilität in Wasser erreicht werden, damit die gegenwärtig üblichen, umweltfreundlichen Beschichtungsverfahren, bei denen wasserbasierte Suspension eingesetzt wird, verwendet werden können.

Durch das mit der Schutzschicht für die Leuchtstoffverbindungen vorgeschlagene Coating kann der Erfüllung dieser Kriterien besonders gut Rechnung getragen werden. Darüber hinaus können mit den genannten spezifischen Ausführungen dieser Schutzschicht möglichst dichte und dünne Schichtbildungen um die einzelnen Leuchtstoffkörner bzw. Leuchtstoffverbindungen herum erzielt werden. Diese Schutzschichten unterscheiden sich in ihrer Zusammensetzung von der Zusammensetzung im Inneren des Leuchtstoffkorns bzw. einer Leuchtstoffverbindung von der mittleren Zusammensetzung. Die Zusammensetzung der Oberfläche lässt sich beispielsweise mit oberflächen-sensitiven Methoden wie XPS oder SNMS bestimmen. Die mittlere Zusammensetzung der Leuchtstoffmischung kann mit volumen-sensitiven Methoden wie EDX, RFA oder aber auch mittels chemischer Analyse ermittelt werden.

Vorzugsweise ist somit die Verwendung einer derartigen Schutzschicht zum Überziehen der ersten Leuchtstoffverbindungen der ersten Leuchtstoffzusammensetzung einer ersten Leuchtstoffschicht der Entladungslampe vorzugsweise vorgesehen.

Es kann vorgesehen sein, dass die Leuchtstoffmischung ausschließlich Leuchtstoffzusammensetzungen aufweist, welche allesamt mit Europium dotiert sind. Vorzugsweise umfasst eine derartige Leuchtstoffmischung maximal vier, insbesondere maximal drei, Leuchtstoffzusammensetzungen. Es kann dabei vorgesehen sein, dass für die im roten Spektralbereich emittierende Leuchtstoffzusammensetzung YOE (Y₂O₃:Eu) als Leuchtstoffverbindung bereitgestellt ist, für die im blauen Spektralbereich emittierende Leuchtstoffzusammensetzung als Leuchtstoffverbindungen BAM oder SCAP, für die im blau-grünen Spektralbereich emittierende Leuchtstoffzusammensetzung als Leuchtstoffverbindungen BAMMn oder SCAP:Mn bereitgestellt sind und für die im grünen Spektralbereich emittierende Leuchtstoffzusammensetzung als erste Leuchtstoffverbindung SrSiON:Eu oder Orthosilikat:Eu bereitgestellt ist. Die Leuchtstoffmischung kann dann durch eine vielfältige Auswahl aus den Leuchtstoffzusammensetzungen aus den dann wiederum jeweils bereitgestellten Leuchtstoffverbindungen erfolgen, so dass eine Vielzahl unterschiedlicher Leuchtstoffmischungen konzipiert werden kann.

Vorzugsweise ist die Entladungslampe als Hg-Niederdruckentladungslampe ausgebildet. Es kann eine Leuchtstoffröhre oder eine Kompaktleuchtstofflampe als Entladungslampe vorgesehen sein.

### Kurze Beschreibung der Zeichnungen

Ausführungsbeispiele der Erfindung werden nachfolgend anhand schematischer Zeichnungen näher erläutert. Es zeigen:
- Fig. 1: eine schematische Schnittdarstellung einer Ausführung einer erfindungsgemäßen Entladungslampe;
- Fig.: 2 ein Emissionsspektrum einer Entladungslampe mit Leuchtstoffmischungen gemäß dem Stand der Technik im Vergleich zu einem Ausführungsbeispiel einer erfindungsgemäßen Leuchtstoffmischung mit einem spezifischen Mischungsverhältnis bezüglich der Gesamtmasse der Leuchtstoffmischung;
- Fig. 3: ein Emissionsspektrum erfindungsgemäßer Leuchtstoffmischungen mit unterschiedlichen Masseverhältnissen zwischen der ersten und der zweiten Leuchtstoffverbindung;
- Fig. 4: Lichtelektrische Werte der Entladungslampe mit einer Leuchtstoffmischung gemäß dem Stand der Technik einerseits und Ausführungsbeispielen erfindungsgemäßer Leuchtstoffmischungen andererseits;
- Fig.: 5 ein Diagramm, in dem das Emissionsspektrum der Entladungslampe für eine Farbtemperatur von 3500 K gezeigt ist; und
- Fig. 6: ein Diagramm, in dem die berechnete Lichtausbeuten und Farbwiedergabewerte für verschiedene Leuchtstoffe dargestellt sind.

### Bevorzugte Ausführung der Erfindung

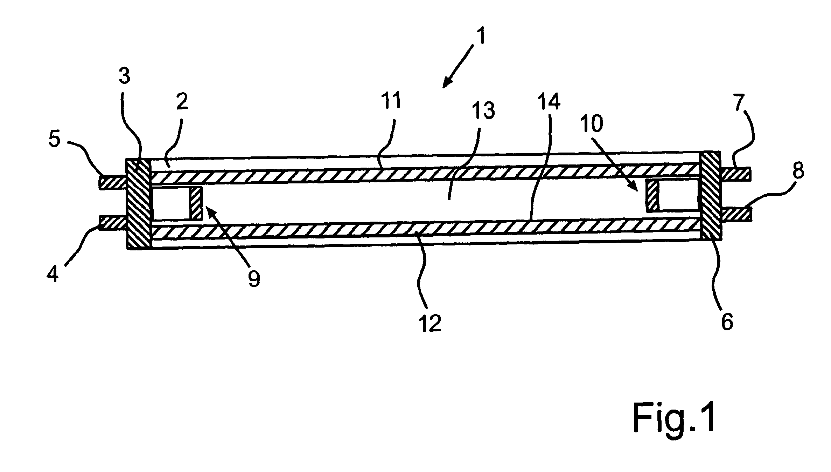

In Fig. 1 ist in einer schematischen Schnittdarstellung eine Entladungslampe 1 gezeigt, welche als Hg-Niederdruckentladungslampe konzipiert ist. Die Entladungslampe 1 ist stabförmig ausgebildet und umfasst ein rohrförmiges Entladungsgefäß 2, welches ein Glaskolben ist. An einem Ende des Entladungsgefäßes 2 ist ein Sockel 3 angebracht, welcher sich nach außen erstreckende elektrische Kontaktierungen 4 und 5 aufweist. An der gegenüberliegenden Seite des Entladungsgefäßes 2 ist ebenfalls ein Sockel 6 angeordnet, an dem sich nach außen erstreckende elektrische Kontaktierungen 7 und 8 befestigt sind. Diese elektrischen Kontaktierungen 7 und 8 sind über Stromzuführungen mit einer Elektrode 10, welche sich in den Entladungsraum 13 des Entladungsgefäßes 2 erstreckt, elektrisch verbunden. In entsprechender Weise sind die elektrischen Kontaktierungen 4 und 5 mit Stromzuführungen verbunden, welche mit einer weiteren Elektrode 9 verbunden sind, wobei sich auch diese Elektrode 9 im Entladungsraum 13 des Entladungsgefäßes 2 erstreckt.

An einer Innenseite 11 des Entladungsgefäßes 2 ist eine Leuchtstoffschicht 12 ausgebildet, welche sich im Ausführungsbeispiel über die gesamte Länge des Entladungsgefäßes 2 erstreckt. Die Leuchtstoffschicht 12 ist im Ausführungsbeispiel unmittelbar an der Innenseite 11 ausgebildet. In der gezeigten Ausführung ist lediglich die Leuchtstoffschicht 12 dargestellt, wobei vorgesehen sein kann, dass auch auf der dem Entladungsraum 13 zugewandten Oberseite 14 und somit der der Innenseite 11 des Entladungsgefäßes 2 abgewandten Oberseite 14 eine weitere Schicht ausgebildet ist. Diese kann beispielsweise eine Schutzschicht insbesondere für die ersten Leuchtstoffverbindungen bzw. Leuchtstoffkörner der Leuchtstoffschicht 12 sein.

Ebenso kann auf dieser Oberseite 14 eine weitere Leuchtstoffschicht ausgebildet sein. Ebenso kann vorgesehen sein, dass zwischen der Leuchtstoffschicht 12 und der Innenseite 11 eine weitere Schicht angeordnet und ausgebildet ist.

Die Leuchtstoffverbindungen sind vorzugsweise mit einer Schutzschicht aus Metalloxiden, einem Borat, einem Phosphat oder einem ternären Material umgeben.

Die Leuchtstoffschicht 12 umfasst eine Leuchtstoffmischung, welche eine erste und zumindest eine zweite Leuchtstoffzusammensetzung aufweist. Die erste Leuchtstoffzusammensetzung weist ein Emissionsspektrum im grünen bis gelben Spektralbereich auf. Die erste Leuchtstoffzusammensetzung umfasst eine erste Leuchtstoffverbindung, welche Tb-frei ausgebildet ist und zur Absorption der von einer Hg-Quelle emittierten UV-Strahlung ausgebildet ist. Als Hg-Quelle werden insbesondere Hg-Atome und Hg-Ionen im Entladungsraum 13 verstanden, welche durch Elektronenanregung insbesondere die UV-Strahlung emittieren. Die erste Leuchtstoffverbindung der ersten Leuchtstoffzusammensetzung ist des Weiteren zur Konversion der absorbierten UV-Strahlung in das Emissionsspektrum der Leuchtstoffverbindung ausgebildet. Der Massenanteil der ersten Leuchtstoffzusammensetzung an dem gesamten Massenanteil der Leuchtstoffmischung ist kleiner oder gleich 50 %. Die Leuchtstoffmischung ist des Weiteren so ausgebildet, dass die Entladungslampe 1 Licht mit Farbtemperaturen größer 2500 K erzeugt.

Durch Kombination der ersten Leuchtstoffzusammensetzung, welche zur Emission im grünen bis gelben Spektralbereich konzipiert ist, mit einer zweiten Leuchtstoffzusammensetzung, welche zur Emission im roten Spektralbereich ausgebildet ist, und einer dritten Leuchtstoffzusammensetzung, welche zur Emission im blauen Spektralbereich ausgebildet ist, lässt sich die gewünschte Farbtemperatur einstellen. Anstelle einer Leuchtstoffmischung mit drei Leuchtstoffzusammensetzungen kann auch vorgesehen sein, dass die Leuchtstoffmischung eine vierte Leuchtstoffzusammensetzung umfasst, welche zur Emission im blau-grünen Spektralbereich ausgebildet ist. Durch eine Zugabe einer derartigen vierten Leuchtstoffzusammensetzung kann die Farbwiedergabe erhöht werden.

In einer Ausführungsform kann vorgesehen sein, dass die Leuchtstoffmischung als erste Leuchtstoffverbindung der ersten Leuchtstoffzusammensetzung (Ba,Sr,Ca)₂SiO₄:Eu oder (Ba,Sr,Ca)SiON:Eu umfasst. Als Leuchtstoffverbindung der zweiten Leuchtstoffzusammensetzung ist YOE:Eu zur Emission im roten Spektralbereich vorgesehen. Des Weiteren kann als Leuchtstoffverbindung für die dritte Leuchtstoffzusammensetzung BAM oder SCAP:Eu für die Emission im blauen Spektralbereich vorgesehen sein. Zusätzlich kann als Leuchtstoff für eine vierte Leuchtstoffzusammensetzung BAMMn:Eu zur Emission im blau-grünen Spektralbereich vorgesehen sein. Die Leuchtstoffmischung besteht dann aus drei bzw. vier Leuchtstoffzusammensetzungen, wobei aus den genannten Leuchtstoffverbindungen ausgewählt werden kann.

In einem weiteren Ausführungsbeispiel kann die Leuchtstoffmischung aus mehr als drei Leuchtstoffzusammensetzungen bestehen, wobei ebenfalls wiederum aus den bereits oben genannten Leuchtstoffverbindungen ausgewählt werden kann. Zusätzlich kann bei diesem Ausführungsbeispiel vorgesehen sein, dass für die erste Leuchtstoffzusammensetzung zweite Leuchtstoffverbindungen vorgesehen sind, welche Tb-haltig ausgebildet sind und beispielsweise CAT oder LAP sein können. CAT bezeichnet dabei eine chemische Verbindung, die im Wesentlichen durch CeMgAl₁₁O₁₉:Tb beschrieben wird. LAP bezeichnet diesbezüglich eine chemische Verbindung, welche im Wesentlichen durch LaPO₄:Ce,Tb beschrieben wird.

Wesentlich ist, dass der Massenanteil an Tb-haltigen Leuchtstoffen kleiner dem Massenanteil an Eu-haltigen Leuchtstoffverbindungen der im grünen Spektralbereich emittierenden ersten Leuchtstoffzusammensetzung ist.

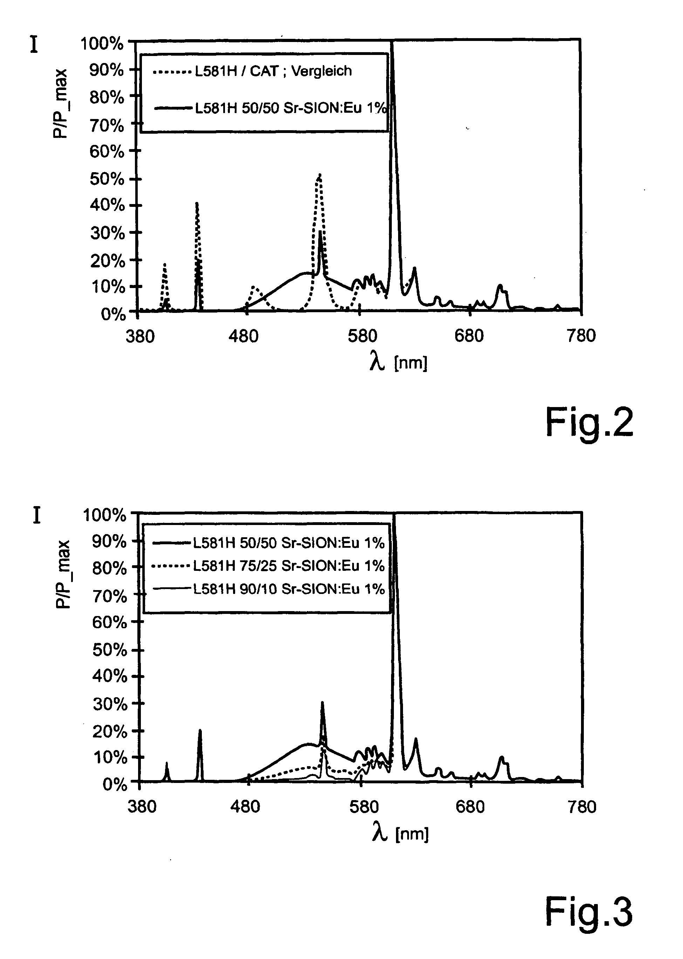

In Fig. 2 ist ein Diagramm gezeigt, bei dem die prozentuale Emissionsintensität in Abhängigkeit der Wellenlänge λ dargestellt ist. Das in Fig. 2 gezeigte Emissionsspektrum ist von einer Entladungslampe gemäß Fig. 1. Dabei zeigt die gestrichelte Linie ein Emissionsspektrum der Entladungslampe 1, welche gemäß dem Stand der Technik ausgebildet ist und somit eine Leuchtstoffschicht umfasst, welche als Leuchtstoffverbindungen Y₂O₃:Eu(L581H) und CAT umfasst.

In Fig. 2 ist darüber hinaus durch die durchgezogene Linie ein Emissionsspektrum einer erfindungsgemäßen Entladungslampe 1 gemäß Fig. 1 gezeigt, bei der die Leuchtstoffschicht 12 eine erfindungsgemäße Leuchtstoffmischung aufweist. Im Emissionsspektrum gemäß Fig. 2 ist diese Leuchtstoffmischung aus Y₂O₃:Eu(L581H) als zweite Leuchtstoffverbindung und SrSiON:Eu als erste Leuchtstoffverbindung aufgebaut. Das Mischungsverhältnis der beiden Leuchtstoffverbindungen in dem genannten spezifischen Ausführungsbeispiel einer erfindungsgemäßen Leuchtstoffmischung beträgt jeweils 50 % (50/50) der Gesamtmasse der Leuchtstoffmischung. Im Ausführungsbeispiel ist die erste Leuchtstoffverbindung mit Eu dotiert, wobei der Massenanteil bzw. Gewichtsanteil von Eu 1 % beträgt. Die Massenanteile 50/50 sind bezogen auf eine Gesamtmasse von 100.

In Fig. 3 ist ein Diagramm gezeigt, bei dem die prozentuale Emissionsintensität I in Abhängigkeit von der Wellenlänge λ dargestellt ist. In dem Diagramm gemäß Fig. 3 sind Emissionsspektren von verschiedenen Ausführungsbeispielen einer erfindungsgemäßen Leuchtstoffmischung mit unterschiedlichen Massenverhältnissen zwischen den beiden Leuchtstoffverbindungen der Leuchtstoffmischungen gezeigt. Wie in dem Diagramm zu erkennen ist, sind Leuchtstoffmischungen mit ihren Emissionsspektren dargestellt, wobei die Masseverteilungen zwischen der zweiten Leuchtstoffverbindung Y₂O₃:Eu(L581H) und der ersten Leuchtstoffverbindung SrSiON:Eu 50 % zu 50 % (50/50), 75 % zu 25 % (75/25) sowie 90 % zu 10 % (90/10) umfassen. Die Emissionsspektren der oben genannten drei unterschiedlichen Ausführungen der erfindungsgemäßen Leuchtstoffmischung sind in der genannten Reihenfolge durch die dicke durchgezogene Linie, durch die gestrichelte Linie und durch die dünne durchgezogenen Linie gezeigt.

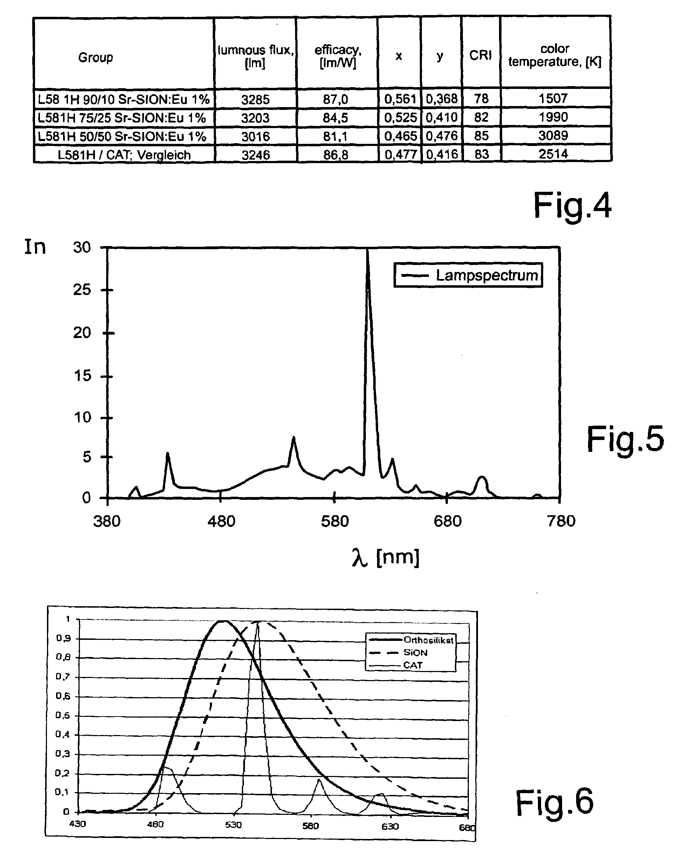

In der Tabelle gemäß Fig. 4 sind die Lichtelektrischen Werte für eine als T8L36W Stablampe ausgebildete Entladungslampe 1 gemäß Fig. 1 gezeigt. Dazu sind gemäß den ersten drei Zeilen Lichtelektrische Werte für diese Entladungslampe 1 gezeigt, wenn die Leuchtstoffschicht 12 jeweils die unterschiedlichen Ausführungen der erfindungsgemäßen Leuchtstoffmischung umfasst. In der letzten vierten Zeile der Tabelle gemäß Fig. 4 ist im Vergleich dazu eine Angabe der Lichtelektrischen Werte angefügt, wenn diese genannte Entladungslampe 1 mit einem aus dem Stand der Technik bekannten Leuchtstoff in der Leuchtstoffschicht ausgebildet ist.

In der vereinfachten Darstellung einer Entladungslampe 1 gemäß Fig. 1 ist die Leuchtstoffschicht 12 unmittelbar an der Innenseite 11 des Entladungsgefäßes 2 angebracht. Weitere Leuchtstoffschichten oder zusätzliche anderweitige Schichten wie beispielsweise Schutzschichten oder dergleichen, sind in der Skizze nicht gezeigt.

Es kann jedoch auch vorgesehen sein, dass das Entladungsgefäß 2 zumindest eine zusätzliche weitere Beschichtung aufweist. Dabei kann vorgesehen sein, dass zwischen der Innenseite 11 des Entladungsgefäßes 2 und der ersten Leuchtstoffschicht 12 mindestens eine zusätzliche Beschichtung ausgebildet ist. Bevorzugt ist diese dazwischen liegende Schicht als Schutzschicht gegenüber einer Hg-Diffusion in das Glas des Entladungsgefäßes 2 ausgebildet.

Zusätzlich oder anstatt dazu kann vorgesehen sein, dass zumindest zwei erste Leuchtstoffschichten 12 an dem Entladungsgefäß 2 ausgebildet sind.

Es kann auch vorgesehen sein, dass ausgehend von der Darstellung gemäß Fig. 1 eine weitere Schicht auf der Oberseite 14 der ersten Leuchtstoffschicht 12 ausgebildet ist. Diese dem Entladungsraum 13 zugewandte weitere Schicht kann ebenfalls eine Schutzschicht sein, welche zum Schutz der Leuchtstoffverbindungen der ersten Leuchtstoffschicht 12 vor Strahlungsschädigung im VUV-Spektralbereich oder vor Reaktion mit Hg-Ionen schützt. Eine entsprechende Beschichtung kann auch direkt auf die einzelnen Leuchtstoffverbindungen bzw. Leuchtstoffkörner der Leuchtstoffmischung der ersten Leuchtstoffschicht 12 aufgebracht sein. Beispielsweise kann eine derartige Strahlungsschädigungs-Schutzschicht und/oder Reaktionsverhinderungs-Schutzschicht als Al₂O₃- oder Y₂O₃-Schutzschicht ausgebildet sein.

Zusätzlich oder anstatt dazu kann vorgesehen sein, dass an dem Entladungsgefäß 2 zumindest eine erste Leuchtstoffschicht 12 mit einer erfindungsgemäßen Leuchtstoffmischung ausgebildet ist, wobei zwischen dem Entladungsraum 13 und dieser ersten Leuchtstoffschicht 12 eine zusätzliche zweite Leuchtstoffschicht (nicht dargestellt) angebracht sein kann, welche als Bestandteil Tb (Terbium) aufweist. Insbesondere ist die erste Leuchtstoffschicht mit einer erfindungsgemäßen Leuchtstoffmischung ohne Tb ausgebildet. Die zweite Leuchtstoffschicht kann beispielsweise eine Leuchtstoffmischung aus den Leuchtstoffverbindungen CAT und YOE aufweisen.

Alle erläuterten Ausführungsbeispiele können auch in beliebiger Weise miteinander kombiniert werden, so dass sich unterschiedlichste Schichtenbildungen und Ausgestaltungen der einzelnen Leuchtstoffschichten und Schutzschichten ergeben können.

In Fig. 5 ist ein Emissionsspektrum einer Entladungslampe 1 für eine Farbtemperatur von 3500 K (x/y 0.439/0.409) durch Superposition bestimmt und dargestellt. Bei einer Wellenlänge λ von 450 nm ist die durch die blaue Leuchtstoffverbindung BAM:Eu erzeugte zusätzliche Emission zu erkennen. Die Leuchtstoffmischung erfasst bei dem in Fig. 5 gezeigten Diagramm die Leuchtstoffverbindungen Y₂O₃:Eu, BAM:Eu und SrSiON:Eu.

Bei Messungen der dominierenden Wellenlänge (lambda_dom) von Lampenmustern hat sich ergeben, dass die Daten (Messpunkte) für Kompaktleuchtstofflampen (CFL) und die für Stablampen (FL) sehr gut übereinstimmen.

Das durch die Leuchtstoffmischung erzeugte Lampenemissionsspektrum erzielt dominierende Wellenlängen in folgenden Bereichen:
Vorzugsweise ist die dominierende Wellenlänge des Lampenemissionsspektrums der gesamten Leuchtstoffmischung größer 540 nm. Insbesondere ist sie für Farbtemperaturen kleiner 2750 K größer als 575 nm, für Farbtemperaturen kleiner 2000 K größer als 585 nm, für Farbtemperaturen kleiner 1750 K größer als 590 nm und für solche kleiner als 1250 K größer als 600 nm.

Die dominierende Wellenlänge wird dabei im CIE 1931 xy-Farbdiagramm bestimmt. Sie entspricht der Wellenlänge des Spektralfarbenzuges (Randkurve des Farbdiagramms) an dem sich die Gerade durch den Weißpunkt bei x = 0.313 und y = 0.337 und dem gemessenen Farbort x, y der Leuchtstoffmischung mit dem Spektralfarbenzug schneidet.

In Fig. 6 ist ein Diagramm gezeigt, in welchem Lichtausbeuten in lm/W und Farbwiedergabewerte Ra in Abhängigkeit von der Wellenlänge dargestellt sind, wobei für drei verschiedene Leuchtstoffe Orthosilikat, SiON und CAT Kurvenverläufe gezeigt sind. Mittels Computersimulation wurde für verschiedene RGB-Dreibanden-Mischungen die in einer Lampe T8 L36W/840 (Farbtemperatur 4000 K, Farbwiedergabeindex > 80) erreichbare Lichtausbeute [lm/W] und Farbwiedergabe Ra berechnet. In der Mischung wurde jeweils der gleiche Rotleuchtstoff YOE, der gleiche Blauleuchtstoff BAM, aber verschiedene Grünleuchtstoffe eingesetzt. Als Grünleuchtstoffe wurden neben CAT (als terbiumhaltiger Referenz-Grünleuchtstoff) zwei verschiedene alternative Eu2+ aktivierte Grünleuchtstoffe gewählt: Orthosilikat mit der Idealformel (Sr,Ba,Eu)₂SiO₄ und SiON mit der Idealformel SrSi₂O₂N₂:Eu. Die Emissionspektren der drei Grünleuchtstoffe im Vergleich sind in Fig. 6 dargestellt.

In der Rechnung wurden folgende Annahmen zugrunde gelegt:
(a) alle Leuchtstoffe mit gleicher QE=80%.
(b) Die LED-Leuchtstoffe absorbieren die 405 nm, 407 nm, 436 nm Hg-Strahlung vollständig und konvertieren sie entsprechend ihrer Quantenausbeute.

Als Ergebnis der Rechnung ergibt sich für CAT eine Lichtausbeute von 94,3 lm/W und CRI-Wert von 82,3. Für Orthosilikat ergibt sich eine Lichtausbeute von 88,3 lm/W und ein CRI-Wert von 86,0. Für SiON ergibt sich eine Lichtausbeute von 94,8 lm/W und ein CRI-Wert von 80,5.

## Patentansprüche

1. Leuchtstoffmischung für eine Entladungslampe (1), welche eine erste und zumindest eine zweite Leuchtstoffzusammensetzung aufweist, wobei die zweite Leuchtstoffzusammensetzung ein Emissionsspektrum im roten Spektralbereich und als Bestandteil Y₂O₃:Eu (YOE) aufweist,
**dadurch gekennzeichnet, dass**
die erste Leuchtstoffzusammensetzung ein Emissionsspektrum im grünen und/oder gelben Spektralbereich aufweist und
- eine erste Leuchtstoffverbindung, welche Tb-frei und zur Absorption der von einer Hg-Quelle emittierten UV-Strahlung ausgebildet ist und als Bestandteil ein Orthosilikat der Formel (Ba,Sr,Ca)₂SiO₄:Eu oder ein Oxinitrid der Formel (Sr_{1-x-y}BaₓCa_{y})Si₂O₂N₂:Eu (SrSiON) aufweist, und
- eine zweite Leuchtstoffverbindung, welche Tb-haltig ausgebildet ist und (Ce,Tb)MgAl₁₁O₁₉ (CAT) und/oder (La,Ce,Tb)PO₄ (LAP) als Bestandteil aufweist,
umfasst.

2. Leuchtstoffmischung nach Anspruch 1,
**dadurch gekennzeichnet, dass**
der Massenanteil an Tb-haltigen zweiten Leuchtstoffverbindungen kleiner ist als der Massenanteil der Tb-freien ersten Leuchtstoffverbindungen.

3. Leuchtstoffmischung nach einem der vorhergehenden Ansprüche,
**dadurch gekennzeichnet, dass**
der Massenanteil der ersten Leuchtstoffzusammensetzung kleiner oder gleich 50% ist.

4. Leuchtstoffmischung nach einem der vorhergehenden Ansprüche,
**dadurch gekennzeichnet, dass**
die erste Leuchtstoffverbindung der ersten Leuchtstoffzusammensetzung für Strahlung mit Wellenlängen kleiner 440 nm eine starke Absorption aufweist, und insbesondere für Strahlung mit einer Wellenlängen von etwa 254 nm eine sehr starke Absorption sowie insbesondere für Strahlung mit einer Wellenlänge größer 530 nm eine schwache Absorption.

5. Leuchtstoffmischung nach einem der vorhergehenden Ansprüche,
**dadurch gekennzeichnet, dass**
das Emissionsspektrum der ersten Leuchtstoffverbindung der ersten Leuchtstoffzusammensetzung eine dominierende Wellenlänge zwischen 530 nm und 570 nm aufweist.

6. Leuchtstoffmischung nach einem der vorhergehenden Ansprüche,
**dadurch gekennzeichnet, dass**
zumindest die erste Leuchtstoffverbindung der ersten Leuchtstoffzusammensetzung mit Eu dotiert ist, wobei der Massenanteil der Dotierung mit Eu insbesondere zwischen 0,1% und 15% und weiter insbesondere zwischen 1% und 2% beträgt.

7. Leuchtstoffmischung nach einem der vorhergehenden Ansprüche,
**dadurch gekennzeichnet, dass**
sie eine dritte Leuchtstoffzusammensetzung umfasst, welche ein Emissionsspektrum im blauen Spektralbereich aufweist, wobei die dritte Leuchtstoffzusammensetzung insbesondere eine Leuchtstoffverbindung aufweist, welche (Ba,Eu) MgAl₁₀O₁₇ (BAM) oder (Sr,Ba,Ca,Mg,Eu)₅(PO₉)₃(F,Cl) (SCAP) als Bestandteile umfasst.

8. Leuchtstoffmischung nach einem der vorhergehenden Ansprüche,
**dadurch gekennzeichnet, dass**
sie eine vierte Leuchtstoffzusammensetzung umfasst, welche ein Emissionsspektrum im blau-grünen Spektralbereich aufweist, wobei die vierte Leuchtstoffzusammensetzung insbesondere eine Leuchtstoffverbindung aufweist, welche (Ba,Eu)(Mg,Mn)Al₁₀O₁₇ (BAMMn) als Bestandteil umfasst.

9. Entladungslampe mit einem Entladungsgefäß (2) an dem eine Leuchtstoffschicht (12) ausgebildet ist,
**dadurch gekennzeichnet, dass**
zumindest eine erste Leuchtstoffschicht (12) ausgebildet ist, welche eine Leuchtstoffmischung nach einem der vorhergehenden Ansprüche aufweist.

10. Entladungslampe nach Anspruch 9,
**dadurch gekennzeichnet, dass**
auf der der Innenseite (11) des Entladungsgefäßes (2) abgewandten Oberseite (14) der ersten Leuchtstoffschicht (12) eine Schutzschicht zum Schutz der ersten Leuchtstoffverbindung vor VUV-Strahlung und/oder einer Reaktion mit Hg-Ionen ausgebildet ist, die insbesondere als Bestandteil Al₂O₃ und/oder Y₂O₃ aufweist.

11. Entladungslampe nach einem der Ansprüche 9 oder 10,
**dadurch gekennzeichnet, dass**
auf der der Innenseite (11) des Entladungsgefäßes (2) abgewandten Oberseite (14) der ersten Leuchtstoffschicht (12) eine zweite Leuchtstoffschicht ausgebildet ist, welche Tb aufweist, wobei die zweite Leuchtstoffschicht insbesondere eine (Ce,Tb)MgAl₁₁O₁₉ (CAT)-Y₂O₃:Eu (YOE)-Mischung als Leuchtstoffverbindungen aufweist.

12. Entladungslampe nach einem der Ansprüche 9 bis 11,
**dadurch gekennzeichnet, dass**
die ersten Leuchtstoffverbindungen der ersten Leuchtstoffzusammensetzung der ersten Leuchtstoffschicht (12) von einer Schutzschicht umgeben sind, die insbesondere Metalloxide und/oder Borate und/oder Phosphate und/oder SiO₂ aufweist.

## Claims

1. Luminescent mixture for a discharge lamp (1), which comprises a first luminescent composition and a second luminescent composition, the second luminescent composition having an emission spectrum in the red spectral range and Y₂O₃:Eu (YOE) as a constituent, **characterized in that** the first luminescent composition has an emission spectrum in the green and/or yellow spectral range, and comprises
- a first luminescent compound which is free of Tb, is adapted for the absorption of UV radiation emitted by an Hg source and has an orthosilicate of the formula (Ba,Sr,Ca)₂SiO₄:Eu or an oxynitride of the formula (Sr_{1-x-y}BaₓCa_{y})Si₂O₂N₂:Eu (SrSiON) as a constituent, and
- a second luminescent compound which is formed containing Tb and has (Ce, Tb) MgAl₁₁O₁₉ (CAT) and/or (La, Ce, Tb) PO₄ (LAP) as constituent(s).

2. Luminescent mixture according to Claim 1, **characterized in that** the proportion by mass of second luminescent compounds containing Tb is less than the proportion by mass of the Tb-free first luminescent compounds.

3. Luminescent mixture according to one of the preceding claims, **characterized in that** the proportion by mass of the first luminescent compound is less than or equal to 50%.

4. Luminescent mixture according to one of the preceding claims, **characterized in that** the first luminescent compound of the first luminescent composition has a strong absorption for radiation with wavelengths shorter than 440 nm, and in particular a very strong absorption for radiation with a wavelength of about 254 nm, and especially a weak absorption for radiation with a wavelength longer than 530 nm.

5. Luminescent mixture according to one of the preceding claims, **characterized in that** the emission spectrum of the first luminescent compound of the first luminescent composition has a dominant wavelength between 530 nm and 570 nm.

6. Luminescent mixture according to one of the preceding claims, **characterized in that** at least the first luminescent compound of the first luminescent composition is doped with Eu, the proportion by mass of the doping with Eu lying in particular between 0.1% and 15%, and more particularly between 1% and 2%.

7. Luminescent mixture according to one of the preceding claims, **characterized in that** it comprises a third luminescent composition, which has an emission spectrum in the blue spectral range, the third luminescent composition having in particular a luminescent compound which comprises (Ba,Eu)MgAl₁₀O₁₇ (BAM) or (Sr,Ba,Ca,Mg,Eu)₅(PO₄)₃(F,Cl) (SCAP) as constituents.

8. Luminescent mixture according to one of the preceding claims, **characterized in that** it comprises a fourth luminescent composition, which has an emission spectrum in the blue-green spectral range, the fourth luminescent composition having in particular a luminescent compound which comprises (Ba,Eu) (Mg,Mn)Al₁₀O₁₇ (BAMMn) as a constituent.

9. Discharge lamp having a discharge vessel (2) on which a luminescent layer (12) is formed, **characterized in that** at least a first luminescent layer (12) which comprises a luminescent mixture according to one of the preceding claims is formed.

10. Discharge lamp according to Claim 9, **characterized in that** a protective layer, which comprises in particular Al₂O₃ and/or Y₂O₃ as a constituent, for protecting the first luminescent compound against VUV radiation and/or a reaction with Hg ions is formed on the upper side (14) of the first luminescent layer (12), facing away from the inner side (11) of the discharge vessel (2).

11. Discharge lamp according to one of Claims 9 and 10, **characterized in that** a second luminescent layer which comprises Tb is formed on the upper side (14) of the first luminescent layer (12), facing away from the inner side (11) of the discharge vessel (2), the second luminescent layer comprising in particular a mixture of (Ce,Tb)MgAl₁₁O₁₉ (CAT) and Y₂O₃:Eu (YOE) as luminescent compounds.

12. Discharge lamp according to one of Claims 9 to 11, **characterized in that** the first luminescent compounds of the first luminescent composition of the first luminescent layer (12) are surrounded by a protective layer, which comprises in particular metal oxides and/or borates and/or phosphates and/or SiO₂.

## Revendications

1. Mélange de substances luminescentes pour une lampe à décharge (1) qui présente une première et au moins une deuxième composition de substances luminescentes, la deuxième composition de substances luminescentes présentant un spectre d'émission dans la région spectrale rouge et, à titre de constituant, du Y₂O₃:Eu (YOE),
**caractérisé en ce que** la première composition de substances luminescentes présente un spectre d'émission dans la région spectrale verte et/ou jaune, et comprend
- un premier composé de substance luminescente qui est réalisé en l'absence de Tb et pour l'absorption du rayonnement UV émis par une source de Hg et qui présente, à titre de constituant, un orthosilicate répondant à la formule (Ba, Sr, Ca) ₂SiO₄:Eu ou un oxynitrure répondant à la formule (Sr_{1-x-y}BaₓCa_{y}) Si₂O₂N₂:Eu (SrSiON), et
- un deuxième composé de substance luminescente qui est réalisé en présence de Tb et qui présente du (Ce,Tb)MgAl₁₁O₁₉ (CAT) et/ou du (La, Ce, Tb) PO₄ (LAP) à titre de constituant.

2. Mélange de substances luminescentes selon la revendication 1,
**caractérisé en ce que** la fraction massique des deuxièmes composés de substances luminescentes contenant du Tb est inférieure à la fraction massique des premiers composés de substances luminescentes exempts de Tb.

3. Mélange de substances luminescentes selon l'une quelconque des revendications précédentes,
**caractérisé en ce que** la fraction massique de la première composition de substances luminescentes est inférieure ou égale à 50 %.

4. Mélange de substances luminescentes selon l'une quelconque des revendications précédentes,
**caractérisé en ce que** le premier composé de substance luminescente de la première composition de substances luminescentes présente une forte absorption pour un rayonnement dont les longueurs d'ondes sont inférieures à 440 nm, et en particulier une très forte absorption pour un rayonnement dont la longueur d'ondes s'élève à environ 254 nm, et en particulier une faible absorption pour un rayonnement dont la longueur d'onde est supérieure à 530 nm.

5. Mélange de substances luminescentes selon l'une quelconque des revendications précédentes,
**caractérisé en ce que** le spectre d'émission du premier composé de substance luminescente de la première composition de substances luminescentes présente une longueur d'onde dominante entre 530 nm et 570 nm.

6. Mélange de substances luminescentes selon l'une quelconque des revendications précédentes,
**caractérisé en ce qu'**au moins le premier composé de substance luminescente de la première composition de substances luminescentes est dopé avec du Eu, la fraction massique du dopage avec Eu s'élevant en particulier entre 0,1% et 15% et de manière plus particulière entre 1% et 2 %.

7. Mélange de substances luminescentes selon l'une quelconque des revendications précédentes,
**caractérisé en ce qu'**il comprend une troisième composition de substances luminescentes qui présente un spectre d'émission dans la région spectrale bleue, la troisième composition de substances luminescentes présentant en particulier un composé de substance luminescente qui comprend du (Ba,Eu)MgAl₁₀O₁₇ (BAM) ou du (Sr,Ba,Ca,Mg,Eu)₅(PO₄)₃(F,Cl) (SCAP) à titre de constituants.

8. Mélange de substances luminescentes selon l'une quelconque des revendications précédentes,
**caractérisé en ce qu'**il comprend une quatrième composition de substances luminescentes qui présente un spectre d'émission dans la région spectrale bleu-vert, la quatrième composition de substances luminescentes présentant en particulier un composé de substance luminescente qui comprend du (Ba,Eu) (Mg,Mn)Al₁₀O₁₇ (BAMMn) à titre de constituant.

9. Lampe à décharge comprenant un tube de décharge (2) sur lequel est réalisée une couche de substance luminescente (12)
**caractérisée en ce qu'**on réalise au moins une première couche de substance luminescente (12) qui présente un mélange de substances luminescentes selon l'une quelconque des revendications précédentes.

10. Lampe à décharge selon la revendication 9,
**caractérisée en ce qu'**on réalise, sur le côté supérieur (14) de la première couche de substance luminescente (12), opposée au côté interne (11) du tube de décharge (2), une couche de protection pour protéger le premier composé de substance luminescente contre le rayonnement VUV et/ou contre une réaction avec des ions Hg, qui présente en particulier du Al₂O₃ et/ou du Y₂O₃ à titre de constituant.

11. Lampe à décharge selon l'une quelconque des revendications 9 ou 10,
**caractérisée en ce qu'**on réalise, sur le côté supérieur (14) de la première couche de substance luminescente (12), opposée au côté interne (11) du tube de décharge (2), une deuxième couche de substance luminescente qui présente du Tb, la deuxième couche de substance luminescente présentant en particulier un mélange (Ce, Tb) MgAl₁₁O₁₉ (CAT) - Y₂O₃:Eu (YOE) à titre de composés de substances luminescentes.

12. Lampe à décharge selon l'une quelconque des revendications 9 à 11,
**caractérisée en ce que** les premiers composés de substances luminescentes de la première composition de substances luminescentes de la première couche de substances luminescentes (12) sont entourés d'une couche de protection qui présente en particulier des oxydes métalliques et/ou des borates et /ou des phosphates et/ou du SiO₂.
